# EUROPEAN PATENT APPLICATION

(11) **EP 2 234 342 A1**
(43) Date of publication of application: **29.09.2010**
(21) Application number: 08870085.1
(22) Date of filing: 29.12.2008
(51) Int. Cl.: H04L 12/56

(54) **METHOD, SYSTEM AND DEVICE FOR TRANSMITTING PACKET MESSAGES**

(30) Priority: 29.12.2007 CN 200710125728
(71) Applicant: Huawei Technologies Co., Ltd., Longgang District, Shenzhen Guangdong 518129 (CN)
(72) Inventor: WANG, Xinping, Shenzhen Guangdong 518129 (CN); JIANG, Lu, Shenzhen Guangdong 518129 (CN); HUANG, Peng, Shenzhen Guangdong 518129 (CN)
(74) Representative: Barth, Stephan Manuel
(86) International application number: PCT/CN2008/073838
(87) International publication number: WO 2009/086779

(57) **Abstract**

A method for forwarding packets is disclosed herein. After packets are received, the packets are forwarded to the corresponding transmission channels according to the packet type, or according to the packet type and the message type and/or service type. A system and an apparatus for forwarding packets are disclosed herein to forward important packets and packets with higher priorities more rapidly and more reliably at higher QoS, especially when the resources are not enough or the network is congested.

## Description

This application claims priority to Chinese Patent Application No. 200710125728.7, filed with the Chinese Patent Office on December 29, 2007 and entitled "Method, System, and Apparatus for Forwarding Packets", which is hereby incorporated by reference in its entirety.

### FIELD OF THE INVENTION

The embodiments of the present invention relates to the field of packet network technologies, and in particular, to a method, a system, and an apparatus for forwarding packets.

### BACKGROUND

With the development of technologies, telecom networks have evolved from analog technologies to digital technologies, and the digital technologies have evolved from circuit switching, such as Time-Division Multiplexing (TDM), to packet switching, such as Internet Protocol (IP), Asynchronous Transfer Mode (ATM) and Frame Relay (FR). The evolution from the TDM to the packet switching is now underway. The three packet switching technologies (IP, ATM, and FR) are described below.

The evolution from the TDM to the ATM failed due to technical difficulty and commercial operation frustration.

In the evolution from the TDM to the IP technology, the Internet (which is typical of the IP network) is characterized by insecurity, untrustworthiness, no management, and no assurance of Quality of Service (QoS) because it is a free open packet network without uniform management mechanism. The design conception of the Internet is a free mode and a non-profit commercial mode. Therefore, many important commercial service networks, and data interconnection services and real-time video services which require high QoS cannot be uploaded onto the public IP network securely. As a result, the IP packet technology is not eligible for evolution of the telecom network from the TDM technology to the packet technology.

In this way, the evolution from the TDM technology to the FR packet technology is frustrated by a lot of obstacles.

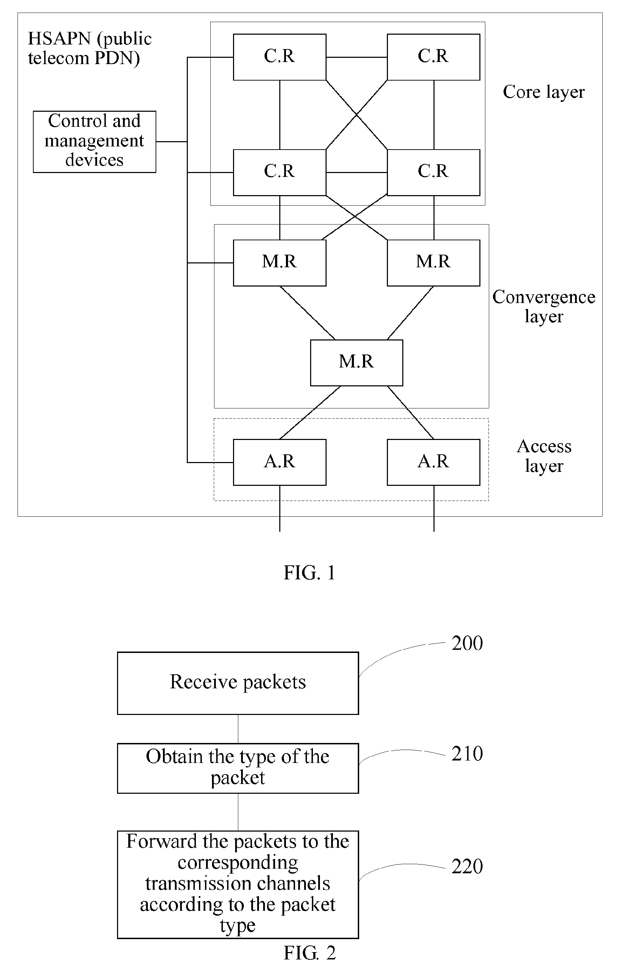

Therefore, a Hierarchical and Sequential Address Packet Network (HSAPN) comes forth for the purpose of evolution from the TDM technology to the packet switching technology. The HSAPN is a sequential hierarchy, and its addressing builds a network address system of the HSAPN hierarchically according to the geographical area, and forms a sequential address structure. FIG. 1 shows a Public packet Telecom Data Network (PTDN) which is an example of the HSAPN. The HSAPN network includes a Core Router (CR) on the core layer, a convergence router (MR) on the convergence layer, and an Access Router (AR) on the access layer, which are all managed by a control management device uniformly. The PTDN is a sequential hierarchy, and its addressing builds a network address system of the PTDN hierarchically according to the geographical area, and forms an orderly address structure. The PTDN can determine the location of a node device (such as an R device) according to the addressing of the node device (namely, AR, MR, or CR).

The packets under an HSAPN public telecom Packet Data Network (PDN) technology in the prior art include control packet, management packet, and data packet. In contrast to data packets, control packets and management packets are more important. In the case of network congestion, the packets of higher importance need to be transmitted more quickly and more reliably at higher QoS. However, in the process of developing the present invention, the inventor finds that no mechanism in the existing HSAPN is available for fulfilling such objectives.

### SUMMARY

The embodiments of the present invention provide a method and an apparatus for forwarding packets to forward important packets and packets with higher priorities more rapidly and more reliably at higher QoS, especially when the resources are not enough or the network is congested.

The objectives of the embodiments of the present invention are fulfilled through the following technical solution.

A method for forwarding packets includes:
receiving the packets;
obtaining type information of the packets; and
forwarding the packets to corresponding transmission channels according to the type information.

An apparatus for forwarding packets includes:
a receiving unit 700, configured to receive the packets;
a first obtaining unit 710, configured to obtain type information of the packets according to the packets; and
a first forwarding unit 720, configured to forward the packets to corresponding transmission channels according to the type information.

A system for forwarding packets includes the above apparatus and at least one physical transmission channel.

According to the embodiments of the present invention, the received packets are forwarded to the corresponding transmission channels according to type information of the packets or according to the packet type and the message type and/or service type. Therefore, important packets and packets with higher priorities are forwarded more rapidly and more reliably at higher QoS, especially when the resources are not enough or the network is congested.

### BRIEF DESCRIPTION OF THE DRAWINGS

FIG. 1 shows an HSAPN networking structure in the prior art;
FIG. 2 is a flowchart of forwarding packets according to type of the packets in an embodiment of the present invention;
FIG. 3 shows forwarding of packets to physical transmission channels in an embodiment of the present invention;
FIG. 4 shows forwarding of packets to logical transmission channels in an embodiment of the present invention;
FIG. 5 shows forwarding of packets to physical transmission channels through priority scheduling in an embodiment of the present invention;
FIG. 6 is a flowchart of forwarding packets according to packet type, and message type and/or service type in an embodiment of the present invention;
FIG. 7 shows a structure of an apparatus for forwarding packets in an embodiment of the present invention; and
FIG. 8 is another schematic diagram of forwarding packets through priority scheduling in an embodiment of the present invention.

### DETAILED DESCRIPTION OF THE EMBODIMENTS

The preferred embodiments and examples given throughout this specification should be regarded as samples of the present invention, and the present invention is not limited to such samples.

In order to make the technical solution, objectives, and merits of the present invention clearer, the following describes the present invention in more detail with reference to some exemplary embodiments and accompanying drawings.

As shown in FIG. 2, a method for forwarding packets is provided in an embodiment of the present invention. The packets include many types. The method includes the following steps:
200: Receive the packets.
   The packets include type information of the packets, the type information of the packets is used for segregating the data plane, the control plane, and the management plane logically, namely, the type information of the packets are used to identify whether a packet is a data packet, or a control packet, or a management packet. The type of a packet among the received packets may be data packet, or control packet, or management packet.
   The type information of the packets is the information carried in each packet, and a packet of a different type (control packet, management packet, or data packet) further includes other information for identifying subcategory of the packet. For example, a control packet or a management packet further includes a message type field for identifying the subcategory of the control type or the management type; a data packet includes a service type field for identifying the subcategory (data service of high importance, data service of medium importance, and data service of low importance) under the data type of packets.
210: Obtain the type of the packets.
   Specifically, an HSAPN packet includes type information of the packet. The type information of the packet may be obtained from the packet type field or another custom field (which may be a new extension of an existing field, or a reused existing field) in the HSAPN packet. For example, if the length of the field is 2 bits, "00" indicates "reserved", 01 indicates a control packet, "10" indicates a management packet, and "11" indicates a data packet. The length of the field may be 4 bits or more bits, which facilitate subsequent protocol extending.
220: Forward the packets to the corresponding transmission channels according to the type of the packets.

Transmission channels may be physical transmission channels or logical transmission channels and have many variations. Three implementation modes are given below:
First implementation method: The transmission channels are physical transmission channels, the bandwidth is fixed, the physical transmission channels correspond to the packet types, and the physical transmission channels are isolated from each other without contending for resources (non-preemptive mode). The number of the physical transmission channels may be the same as the number of packet types, namely, in a one-to-one relation, or may be different from the number of packet types, namely, in a one-to-many or many-to-one relation. The number of transmission channels includes many variations:
   1. Number of transmission channels (N) = number of packet types (M): Each transmission channel corresponds to a packet type. All transmission channels may have the same bandwidth, or the important messages occupy more bandwidth.
   2. Number of transmission channels (N) > number of packet types (M): Supposing that N = M + 1, the additional transmission channel may be used as a public transmission channel, which may be dynamically occupied by the packet whose traffic is larger, or preferably, may be occupied by the packet of higher priority in a limited way.
   3. Number of transmission channels (N) < number of packet types (M): Two or more than two types of packets may share a transmission channel. For example, two types of packets of low importance share a transmission channel.

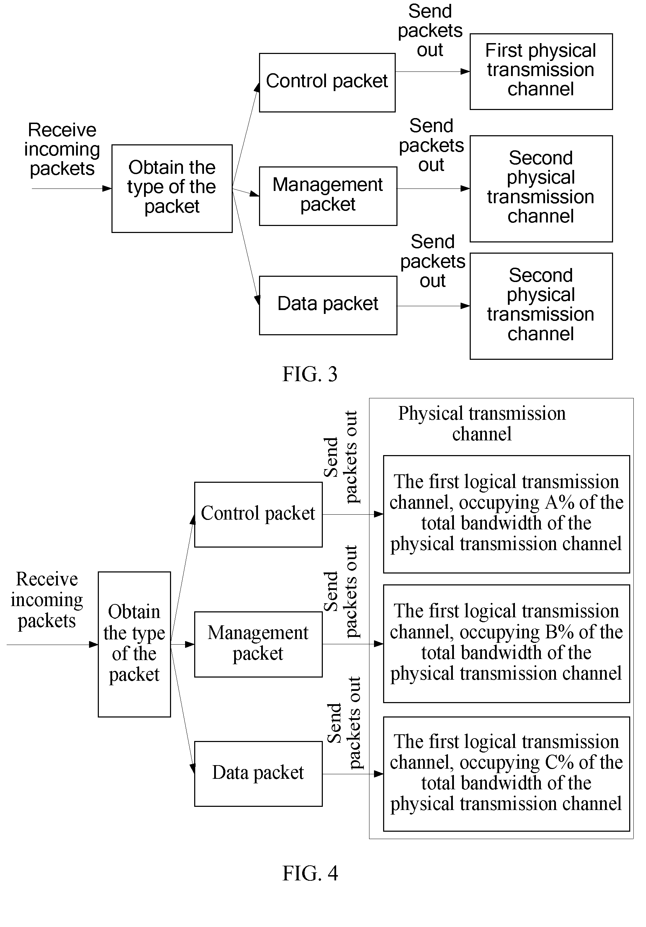

This embodiment assumes that the number of transmission channels (N) is equal to the number of packet types (M). It is same with other scenarios. As shown in FIG. 3, it is assumed that three packet types (control packet, management packet, and data packet) exist, and correspond to three physical transmission channels (the first physical transmission channel, the second physical transmission channel, and the third physical transmission channel). The packet type is in a one-to-one relation to the channel. Important packets may correspond to the physical transmission channels of higher bandwidth. Each type of packet is forwarded to the physical transmission channel corresponding to the type of the packet. With this method, contending of bandwidth resources between different types of packets is prevented, and the bandwidth for all types of packets, especially the bandwidth for important packets, is absolutely ensured. This method imposes relatively high requirements on hardware facilities.

Second implementation method: The channels are logical transmission channels, the bandwidth is fixed, and the logical transmission channels are isolated from each other without contending for resources (non-preemptive mode). That is, different types of packets are physically forwarded to the same physical transmission channel, and the physical transmission channel is logically divided into multiple logical transmission channels. The logical transmission channels are isolated from each other without contending for resources (non-preemptive mode). As regards the number of logical transmission subchannels, the first scenario in this embodiment serves as a reference. Here it is still assumed that the number of transmission channels (N) is equal to the number of packet types (M). It is the same with other scenarios. As shown in FIG. 4, it is still assumed that three packet types (control packet, management packet, and data packet) exist, and correspond to three logical transmission channels (the first logical transmission channel, the second logical transmission channel, and the third logical transmission channel). If the total bandwidth of the physical transmission channels corresponding to the three logical transmission channel is N, the bandwidth of the three logical transmission channels may be: The bandwidth of the first logical transmission channel is A% of the total bandwidth, the bandwidth of the second logical transmission channel is B% of the total bandwidth, and the bandwidth of the third logical transmission channel is C% of the total bandwidth. The packet type is in a one-to-one relation to the logical transmission channel. Important packets may correspond to logical transmission channels of higher bandwidth, and each type of packet is forwarded to the logical transmission channel corresponding to the packet type of the packet. With this method, contending of bandwidth resources between different types of packets also is prevented, and the bandwidth for all types of packets, especially the bandwidth for important packets, is absolutely ensured. This method does not impose high requirements on hardware facilities. It should be noted that 0<A%+B%+C%≤1. If the total bandwidth is less than 1, the idle bandwidth resources may be occupied by the packets of high traffic dynamically, and preferably, occupied by the packets of higher importance first.

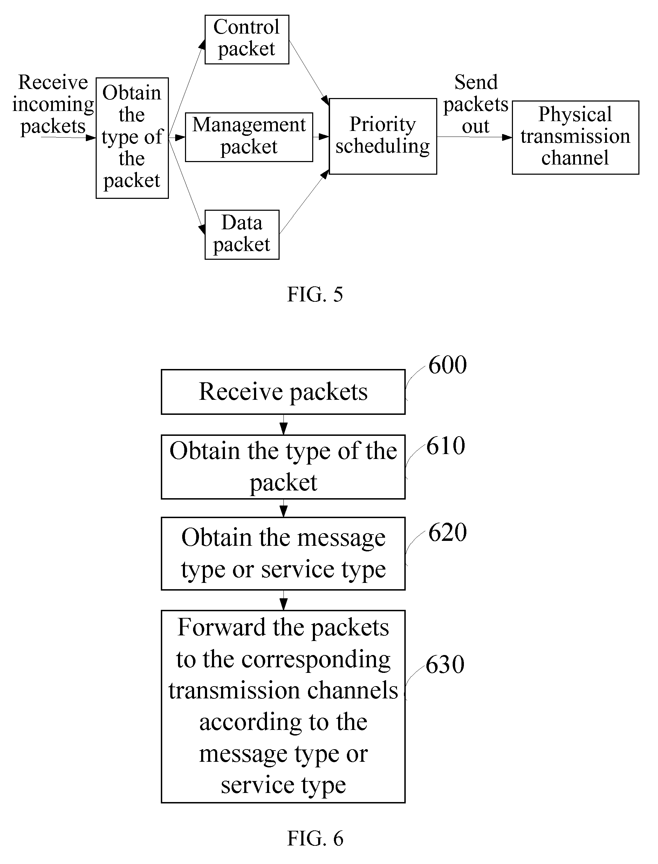

Third implementation method: The channels are physical transmission channels, and all types of packets share a physical transmission channel. Like the second method, all types of packets share a physical transmission channel, but differently, the bandwidth of each type of packet is not fixed in this method. In a specific implementation, before the packets are forwarded to the physical transmission channels, the packets may be scheduled according to the priority of the type of the packet. The priorities may be adjusted as required. As shown in FIG. 5, it is assumed that the priority of a management packet is lower than the priority of a control packet but higher than the priority of a data packet. The priorities allocated to the control packet, the management packet and the data packet are arranged in descending order. When two or more types of packets need to be forwarded, various packets are forwarded according to such order of priority. That is, the packet of higher priority is forwarded first so that the bandwidth of the packet of higher priority is ensured. Given below is an example of this method.

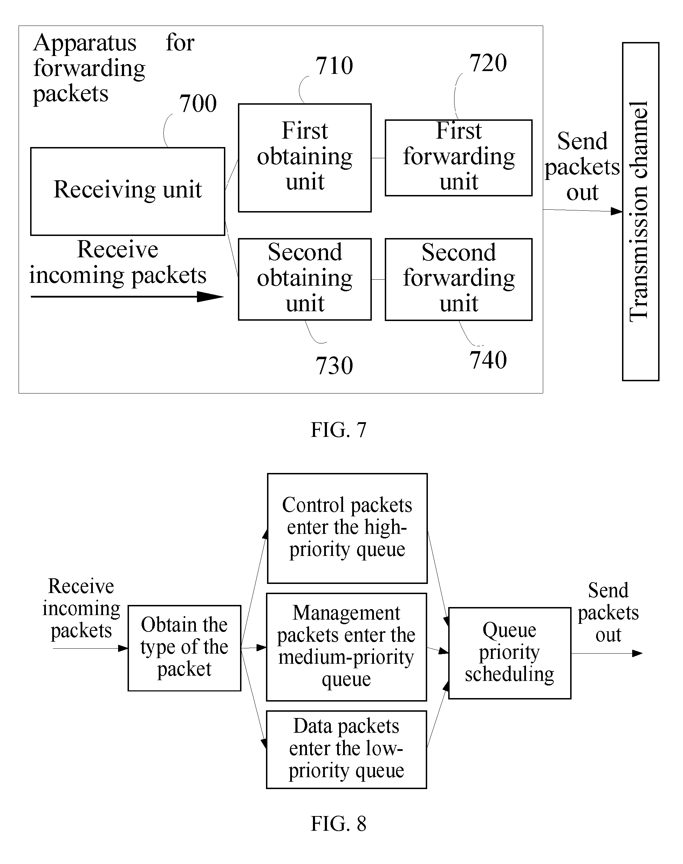

Priorities are allocated to different packets. For example, a control packet is most important and allocated with the highest priority which is 01, a management packet is medium important and allocated with the higher priority of which is 10, and a data packet is lowest important and allocated with the lowest priority which is 11. Obviously, the priority of a control packet is not necessarily the highest, and the priority may be adjusted as required. As shown in FIG. 8, the allocation of priorities may be implemented through Priority Queuing (PQ). For example, control packets are scheduled into a high-priority queue, management packets are scheduled into a medium-priority queue, and data packets are scheduled into a low-priority queue. Afterward, the three priority queues are scheduled. For example, if the forwarding quality of packets in the high-priority queue needs to be ensured strictly, a PQ algorithm applies; if the data packets need to be forwarded properly when control packets exist, a Weighted Fair Queuing (WFQ) algorithm applies. The specific queue scheduling algorithm may be determined as required, and the determining method is covered in the prior art.

In this embodiment, priorities are allocated to the HSAPN packets according to the packet type (control packet, management packet, and data packet) to ensure that the packets of high priority (such as control packets and management packets) are forwarded more rapidly and more reliably at higher QoS, especially when resources are not enough or the network is congested.

In another embodiment of the present invention, Not only the packet type is obtained, but also the message type in the control packet or management packet, or the service type in the data packet is obtained, and different types of messages and/or services are differentiated between each other. Different types of messages and/or services are forwarded or processed differently so that the bandwidth is ensured for the messages and/or services of higher priority under the same packet type. As shown in FIG. 6, a method for forwarding packets is provided in this embodiment. Step 600 and step 610 in FIG. 6 are the same as step 200 and step 210 in FIG. 2 respectively.
620: Obtain the message type or service type. The packets of the same type include different types of messages or services. The following description supposes that the packet types include control packet, management packet, and data packet. If more other types of packets exist, the processing method is the same.

Control packets: After control packets are obtained, the message type of each control packet is further obtained from the message type field or another custom field of the control packet (the field may be a new extension of an existing field, or a reused existing field). The messages in control packets include many types, for example, the messages in control packets include command message, instruction message, confirmation message, and response message. For example, if the length of a message type field is 2 bits, "00" indicates a command message, "01" indicates an instruction message, "10" indicates a confirmation message, and "11" indicates a response message. Obviously, the length of a message type field may be greater than 2 bits. This embodiment does not restrict the length of the message type field, and any message type field eligible for differentiating between the control packets is appropriate.

Management packets: The messages in management packets include many types, for example, Operation Administration Maintenance (OAM) message, Simple Network Management Protocol (SNMP) message, and response message. Likewise, after management packets are obtained, the message type of each management packet is further obtained from the message type field or another custom field of the management packet (the field may be a new extension of an existing field, or a reused existing field).

Data packets: For example, data packets can be categorized into data services of high importance, data services of medium importance, and data services of low importance. Likewise, after data packets are obtained, the service type of each data packet is further obtained from the service type field or another field of the data packet (the field may be a new extension of an existing field, or a reused existing field). In practice, the data packets may be categorized in a different way. Here as an example, it is assumed that the data packets are categorized into data service of high importance, data service of medium importance, and data service of low importance.

Step 610 may be performed before, during, or after step 620.
630: Forward the packets to the corresponding transmission channels according to the message type or service type.

There are many variations of transmission channels. A transmission channel may be a physical transmission channel or a logical transmission channel. In this case, the number of transmission channels is interrelated to the number of the message types and/or service types, or the number of the transmission channels is interrelated to the packet type, as detailed below.

In the case that the number of transmission channels is interrelated to the number of message types and/or service types, the first scenario in the previous embodiment applies to the number of transmission channels. Here it is assumed that the number of transmission channels is equal to the number of the message types and/or service types. When the transmission channel is in a one-to-one relation to the message type and/or service type, step 630 in this embodiment is the same as step 220 in FIG. 2. It should be noted that priorities may be determined for all types of messages and services uniformly according to importance, and higher bandwidth or priority is allocated to the messages or services of high importance.

In the case that the number of transmission channels is interrelated to the message types and/or service types, the first scenario in the previous embodiment applies to the number of transmission channels. Here as an example, it is assumed that the number of transmission channels is equal to the number of packet types. If the transmission channel is in a one-to-one relation to the packet type, the processing method is described below with respect to the physical channels and the logical channels in the previous embodiment.

First scenario: The channels are physical transmission channels, the bandwidth is fixed, the physical transmission channel is in a one-to-one relation to the packet type, and the physical transmission channels are isolated from each other without contending for resources (non-preemptive mode). A physical transmission channel may be subdivided into multiple transmission subchannels according to the message type and the service type. Multiple transmission subchannels may contend for resources (preemptive mode) or may not contend for resources (non-preemptive mode). The number of transmission subchannels under a physical transmission channel corresponding to each packet type may be equal to or unequal to the number of message types under this packet type. For example, it is assumed that four message types exist under a control packet, namely, command message, instruction message, confirmation message, and response message, whose importance levels are arranged in descending order. The number of transmission subchannels includes many variations:
1. The number of transmission subchannels (N) = the number of message types (M): A physical transmission channel corresponding to a control packet is subdivided into four transmission subchannels, and each transmission subchannel corresponds to a message type. All transmission subchannels may have the same bandwidth, or higher bandwidth is allocated to the messages of higher importance.
2. The number of transmission subchannels (N) > the number of message types (M): A physical transmission channel corresponding to a control packet is subdivided into five transmission subchannels. On the basis of variation 1, the fifth transmission subchannel serves as a public transmission subchannel. When the traffic of a certain type of messages is relatively higher, the public transmission subchannel is dynamically occupied to this type of messages.
3. The number of transmission subchannels (N) < the number of message types (M): A physical transmission channel corresponding to a control packet is subdivided into three transmission subchannels, and the two types of messages share a transmission subchannel. For example, confirmation messages and response messages whose importance is lower share a transmission subchannel.

The foregoing description takes control packets as an example. It is the same with other types of packets.

Second scenario: The channels are logical transmission channels, the bandwidth is fixed, the logical transmission channel is in a one-to-one relation to the packet type, and the logical transmission channels are isolated from each other without contending for resources (non-preemptive mode). A logical transmission channel may be subdivided into multiple transmission subchannels according to the message type and the service type. Multiple transmission subchannels may contend for resources (preemptive mode) or may not contend for resources (non-preemptive mode). The number of transmission subchannels under a physical transmission channel corresponding to each packet type may be equal to or unequal to the number of message types under this packet type. For details, see the first scenario above.

In this embodiment, different message types and/or service types are identified under the same type of packets, and the packets are forwarded to the corresponding transmission channels according to importance of each type of messages and/or services, thus the packets of high importance are forwarded more rapidly and more reliably.

As shown in FIG. 7, based on the foregoing method embodiments, an apparatus for forwarding packets is provided according to an embodiment of the present invention. The apparatus includes:
a receiving unit 700, configured to receive packets;
a first obtaining unit 710, configured to obtain type of each packet according to the received packets; and
a first forwarding unit 720, configured to forward the packets to corresponding transmission channels according to the type of the packet.

The apparatus may further includes:
a second obtaining unit 730, configured to obtain message type or service type of each packet according to the received packets; and
accordingly, the apparatus further includes a second forwarding unit 740, configured to forward the packets to the corresponding transmission channels according to the message type or service type.

Through the apparatus in this embodiment, the packet types are identified, or further the message types and/or service types under each type of packets are identified, and the packets are forwarded to the corresponding transmission channels according to importance of the type of packets or the type of messages and/or services, thus the packets of high importance are forwarded more rapidly and more reliably.

Based on the foregoing method embodiments and apparatus embodiment, a system for forwarding packets is provided according to an embodiment of the present invention. The system includes the foregoing apparatus and at least one physical transmission channel.

In an IP network, a method for forwarding different types of service traffic discriminatively may be applied. However, the discriminative forwarding in an IP network is limited to discrimination of the service traffic in a data plane. In IP architecture, the information in the control plane and the management plane is carried in an in-band data plane. When network resources are not enough, the traffic of the data plane may even contend for resources of the control packets and management packets. That leads to insecurity of network, difficulty of OAM (fault detection, locating and recovery), and difficulty of performance monitoring, and the management packets do not occupy resources preemptively. According to the embodiments of the present invention, the traffic may be differentiated between the control plane, the management plane, and the data plane, and the availability of resources is ensured to packets of the three planes according to the priorities of the packets. Moreover, the traffic in every plane may be subcategorized. That is, not only the traffic in the data plane can be categorized, the traffic in the control plane and the traffic in the management plane can be categorized, and the traffic of higher importance is forwarded more rapidly and more reliably at higher QoS.

The computer-readable media in the embodiments of the present invention may be media that include, store, convey, propagate, or transmit computer programs. The computer programs are programs that use instructions to run the apparatus, system, or device under the present invention, or programs related to the instructions. The computer-readable media may be electronic, magnetic, electromagnetic, optical, infrared, or semiconductor system, apparatus, device, propagation media, or computer storage.

Although the invention is described through some exemplary embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

After reading the foregoing embodiments, those skilled in the art are clearly aware that the present invention may be implemented through hardware, or through software in addition to a necessary universal hardware platform. The technical solution under the present invention may be embodied as a software product. The software product may be stored in a non-volatile storage medium (such as Compact Disc Read-Only Memory (CD-ROM), Universal Serial BUS (USB) flash disk, or mobile hard disk), and may include several instructions that enable a computer device (such as personal computer, server, or network device) to perform the methods provided in the embodiments of the present invention.

The above descriptions are merely some exemplary embodiments of the present invention, but not intended to limit the scope of the present invention. Any modification, equivalent replacement, or improvement made without departing from the spirit and principle of the present invention should fall within the scope of the present invention.

## Claims

1. A method for forwarding packets, comprising:
receiving the packets;
obtaining type information of the packets; and
forwarding the packets to corresponding transmission channels according to the type information.

2. The method of claim 1, wherein:
the obtaining of the type information of the packets is to obtain type of each packet.

3. The method of claim 2, wherein:
the obtaining of the type of each packet is to obtain the type of the packet from a packet type field of the packet; or
the obtaining of the type of each packet is to obtain the type of the packet from a custom field of the packet.

4. The method according to any one of claims 1-3, wherein the forwarding of the packets to the corresponding transmission channels according to the type information, comprises:
forwarding the packets to corresponding physical transmission channels according to the type information, wherein the physical transmission channels have fixed bandwidth in a non-preemptive mode; or
forwarding the packets to corresponding logical transmission channels according to the type information, wherein the logical transmission channels have fixed bandwidth in a non-preemptive mode; or
differentiating priorities of the packets according to the type information, and forwarding the packets to the physical transmission channels through priority scheduling.

5. The method of claim 2, further comprising:
obtaining message type or service type of the packet; and
if the number of transmission channels is determined according to the number of the message types or service types, accordingly, the forwarding of the packets to the corresponding transmission channels according to the type information comprises: forwarding the packets to corresponding physical transmission channels according to the message type or the service type, wherein the physical transmission channels have fixed bandwidth in a non-preemptive mode; or
accordingly, the forwarding of the packets to the corresponding transmission channels according to the type information comprises: forwarding the packets to corresponding logical transmission channels according to the type of the packet, wherein the logical transmission channels have fixed bandwidth in a non-preemptive mode; or
accordingly, the forwarding of the packets to the corresponding transmission channels according to the type information comprises: differentiating priorities of the packets according to the type of each packet, and forwarding the packets to the physical transmission channels through priority scheduling.

6. The method of claim 2, further comprising:
obtaining message type or service type of the packet; and
if the number of transmission channels is determined according to the number of packet types, accordingly, the forwarding of the packets to the corresponding transmission channels according to the type information comprises: on preconditions that the transmission channels are physical transmission channels which have fixed bandwidth in a non-preemptive mode, dividing each physical transmission channel into multiple physical transmission subchannels according to the message type or the service type, wherein the physical transmission subchannels are in a preemptive mode or non-preemptive mode; and forwarding the packets to the corresponding physical transmission subchannels according to the message type or the service type; or
accordingly, the forwarding of the packets to the corresponding transmission channels according to the type information comprises: on preconditions that the transmission channels are logical transmission channels which have fixed bandwidth in a non-preemptive mode, dividing each logical transmission channel into multiple logical transmission subchannels according to the message type or the service type, wherein the logical transmission subchannels are in a preemptive mode or non-preemptive mode; and forwarding the packets to the corresponding logical transmission subchannels according to the message type or the service type.

7. The method of claim 5 or 6, wherein the obtaining of the message type or the service type is:
obtaining the message type from a message type field, and obtaining the service type from a service type field; or
obtaining the message type or the service type from a custom field.

8. The method of claim 4, wherein the differentiating of the priorities of the packets according to the type information and forwarding the packets to the physical transmission channels through priority scheduling is:
setting the priorities according to importance of different packet types, differentiating the priority of each packet according to the obtained type information of the packets, and forwarding the packets to the corresponding transmission channels through priority scheduling.

9. The method of claim 5, wherein the differentiating of the priorities of the packets according to the type information and forwarding the packets to the physical transmission channels through priority scheduling is:
setting the priorities according to importance of different types of messages and/or services, differentiating the priority of each packet according to the obtained message type and/or service type, and forwarding the packets to the corresponding transmission channels through priority scheduling.

10. The method of claim 1, wherein the obtaining of the type information of the packets is:
obtaining type of each packet, message type, and service type; and
determining priorities of all types of packets, messages, and services uniformly based on importance according to the type of the packet, the message type, and the service type, and allocating higher bandwidth or higher priorities to the packets, or messages, or services of higher importance.

11. An apparatus for forwarding packets, comprising:
a receiving unit (700), configured to receive the packets;
a first obtaining unit (710), configured to obtain type information of the packets according to the packets; and
a first forwarding unit (720), configured to forward the packets to corresponding transmission channels according to the type information.

12. The apparatus of claim 11, further comprising:
a second obtaining unit (730), configured to obtain message type or service type of the packets according to the packets; and
accordingly, the apparatus further comprises:
a second forwarding unit (740), configured to forward the packets to the corresponding transmission channels according to the message type or service type.

13. A system for forwarding packets, wherein:
the system comprises the apparatus of claim 11 or 12 and at least one physical transmission channel.
